# EUROPEAN PATENT APPLICATION

(11) **EP 1 902 862 A2**
(43) Date of publication of application: **26.03.2008**
(21) Application number: 07018869.3
(22) Date of filing: 25.09.2007
(51) Int. Cl.: B60B 27/00, F16C 19/18, F16C 19/38, F16C 35/067

(54) **Rolling bearing apparatus for wheel**

(30) Priority: 25.09.2006 JP 2006258646
(71) Applicant: JTEKT Corporation, Osaka-shi Osaka 542-8502 (JP)
(72) Inventor: Seo, Nobuyuki, Osaka-shi Osaka 542-8502 (JP)
(74) Representative: Hager, Thomas Johannes

(57) **Abstract**

In a rolling bearing apparatus for a wheel including a fixing flange having a plurality of bolt holes through which male thread portions of bolts for fixing the bearing apparatus to a vehicle body side member are respectively passed, one side surface of the fixing flange includes bolt seat surfaces in a round shape which are formed by cutting work concentrically with respective centers of the bolt holes, each of the bolt seat surfaces having a larger diameter than a head portion of the bolt.

## Description

### BACKGROUND OF THE INVENTION

The present invention relates to a rolling bearing apparatus for a wheel provided with a fixing flange having a plurality of bolt holes through which male thread portions of bolts for fixing the bearing apparatus to a vehicle body side member are respectively passed.

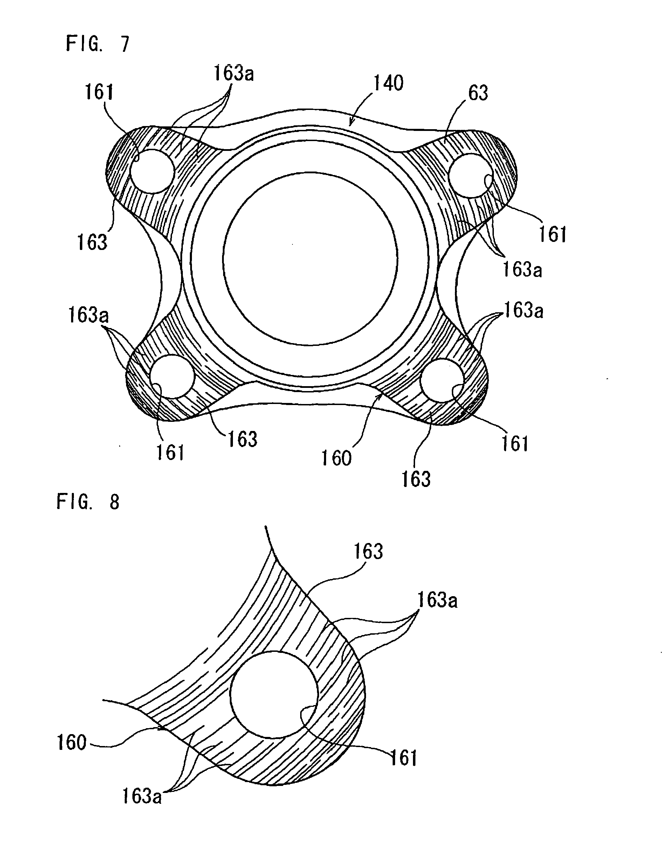

In the rolling bearing apparatus for a wheel of this type, a fixing flange 160 is formed on an outer peripheral surface of an outer ring 140, as shown in Figs. 7 and 8. This fixing flange 160 is provided with a plurality of bolt holes 161 through which the male thread portions of the bolts for fixing the bearing apparatus to the vehicle body side member (a knuckle or a carrier) are respectively passed, at an interval of a determined angle on a determined pitch circle.
Moreover, on one side surface of the fixing flange 160, there are formed bolt seat surfaces 163 having cutting stripes (cutting marks) 163a which have been formed by cutting edges of a lathe in a direction intersecting (substantially at a right angle) respective circumferences of the bolt holes 161.
After the male thread portions of the bolts have been respectively inserted into the bolt holes 161 from the side having the bolt seat surfaces 163 of the fixing flange 160, head portions of the bolts are turned with a determined torque by means of tightening tools to screw the male thread portions into the vehicle body side member, whereby the fixing flange 160 is fixed.
The conventional rolling bearing apparatus for the wheel in which the fixing flange 160 is formed on the outer peripheral surface of the outer ring, and a plurality of the bolt holes through which the male thread portions of the bolts for fixing the bearing apparatus to the vehicle body side member (the knuckle or carrier) are respectively passed are provided on this fixing flange 160, on a determined pitch circle is disclosed, for example, in JP-A-2002-61660.

By the way, in the above described conventional rolling bearing apparatus, the cutting stripes (cutting marks) 163a which have been formed by the cutting edges in the direction intersecting the respective circumferences of the bolt boles 161 are present on the bolt seat surfaces 163 of the fixing flange 160. Consequently, there is such a fear that when the male thread portions are screwed into the vehicle body side member by turning the head portions of the bolts with the determined tightening torque by the tightening tools, friction forces which occur between the head portions of the bolts and the bolt seat surfaces may tend to be dispersed.
Particularly, in case where the cutting stripes (cutting marks) 163a on the bolt seat surfaces 163 are rough, dispersion of the friction forces between the head portions of the bolts and the bolt seat surfaces 163 becomes remarkable. Accordingly, there has been such anxiety that the tightening force of the bolts (the male thread portions) may become short, even though the male thread portions have been screwed into the vehicle body side member by turning the head portions of the bolts with the determined tightening torque by means of the tightening tools. In this case, when tightened condition is inspected after the bolts have been tightened, the bearing apparatus cannot pass the inspection, and the tightening work must be conducted again, which has been a factor of deterioration of production efficiency.

### SUMMARY OF THE INVENTION

In view of the above described problems, it is an object of the invention to provide a rolling bearing apparatus for a wheel in which when male thread portions of bolts are screwed into a vehicle body side member by turning head portions of the bolts with a determined tightening torque by means of tightening tools, dispersion of friction forces which occur between head portions of the bolts and bolt seat surfaces can be depressed to be small, whereby shortage of the tightening forces of the bolts (the male thread portions) can be prevented.

In order to attain the above described object, a rolling bearing apparatus for a wheel according to the invention includes a fixing flange that includes a plurality of bolt holes through which male thread portions of bolts for fixing the bearing apparatus to a vehicle body side member are respectively passed,
in which one side surface of the fixing flange includes bolt seat surfaces in a round shape which are formed by cutting work concentrically with respective centers of the bolt holes, each of the bolt seat surfaces having a larger diameter than a head portion of the bolt.

According to the above described structure, there exist cutting stripes (cutting marks) on the bolt seat surfaces of the fixing flange, in a direction concentric with respective centers of the bolt holes. Therefore, even in case where the cutting stripes (the cutting marks) on the bolt seat surfaces are rough, it is possible to depress friction forces which occur between the headportions of the bolts and the bolt seat surfaces, when the head portions of the bolts are turned by the tightening tools with the predetermined tightening torque to screw the male thread portions into the vehicle body side member. In addition, it is possible to prevent shortage of the tightening forces of the bolts (the male thread portions), when the head portions of the bolts are turned by the tightening tools with a determined tightening torque and the male thread portions are screwed into the vehicle body side member.

According to the rolling bearing apparatus for the wheel according to the invention, the bolt seat surface is formed by cutting work by a rotary tool which has a cutting edge on a distal end surface thereof, the cutting edge having a cutting diameter corresponding to the bolt seat surface.
According to the above described structure, by advancing the rotary tool concentrically with the center of the bolt hole against one side surface of the fixing flange, it is possible to easily form the bolt seat surface in a round shape which is formed by cutting work concentrically with the center of the bolt hole and has the diameter larger than the head portion of the bolt.
Moreover, by simultaneously advancing a plurality of the rotary tools of the same number as a plurality of the bolt holes in the fixing flange against the one side surface of the fixing flange, it is possible to form a plurality of the bolt seat surfaces in a round shape at the same time.

### BRIEF DESCRIPTION OF THE DRAWINGS

Fig. 1 is a sectional side view showing a hub unit for a wheel, as a rolling bearing apparatus for a wheel according to an embodiment according to the invention.
Fig. 2 is a front view showing a fixing flange of an outer ring according to the embodiment.
Fig. 3 is an explanatory view showing, in an enlarged scale, cutting stripes on a bolt seat surface of the fixing flange according to the embodiment.
Fig. 4 is a sectional view showing the fixing flange in a state before the bolt seat surface is formed on its one side surface by a rotary tool, according to the embodiment.
Fig. 5 is a sectional view showing the fixing flange in a state after the bolt seat surface is formed on its one side surface by the rotary tool, according to the embodiment.
Fig. 6 is a sectional view showing the fixing flange in a state tightened to a knuckle as a vehicle body side member with a bolt, according to the embodiment.
Fig. 7 is a front view showing a fixing flange of an outer ring in a conventional rolling bearing apparatus for a wheel.
Fig. 8 is an explanatory view showing, in an enlarged scale, cutting stripes on a bolt seat surface of the fixing flange in the conventional rolling bearing apparatus for the wheel.

### DETAILED DESCRIPTION OF PREFERRED EMBODIMENTS

Now, the best mode for carrying out the invention will be described referring to embodiments.

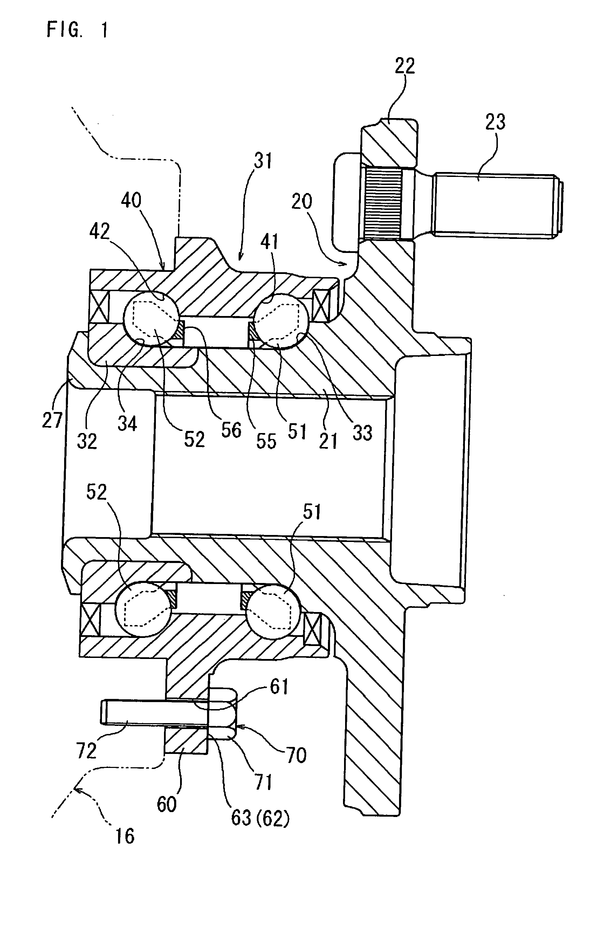

The embodiment according to the invention will be described referring to Figs. 1 to 6.

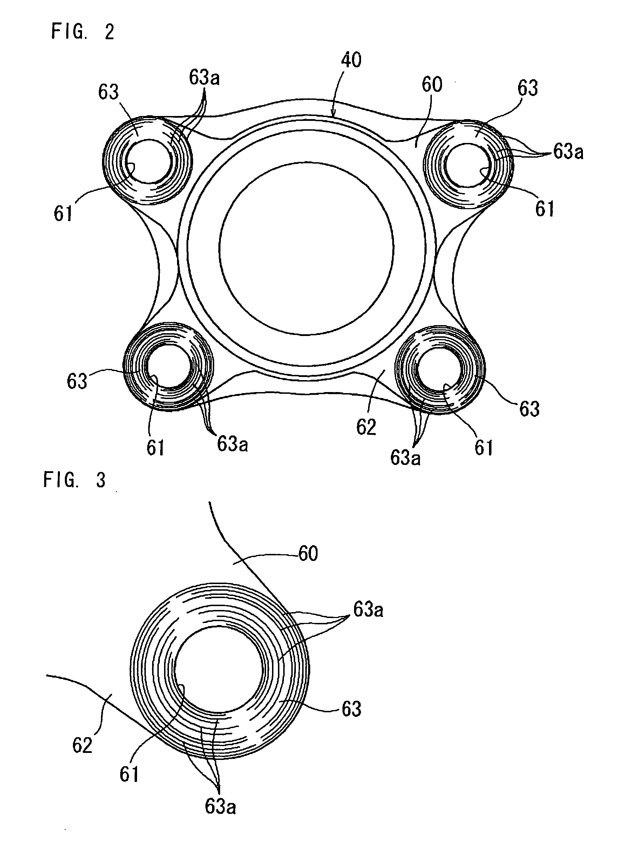

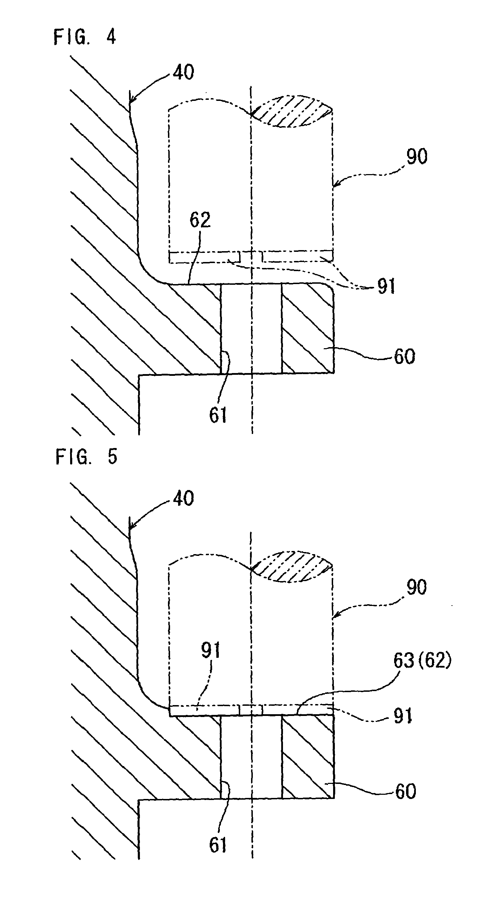

Fig. 1 is a sectional side view showing a hub unit for a wheel, as the rolling bearing apparatus for the wheel in the embodiment according to the invention. Fig. 2 is a front view showing a fixing flange of an outer ring. Fig. 3 is an explanatory view showing, in an enlarged scale, cutting stripes on abolt seat surface of the fixing flange. Fig. 4 is a sectional view showing the fixing flange in a state before the bolt seat surface is formed on its one side surface by a rotary tool.

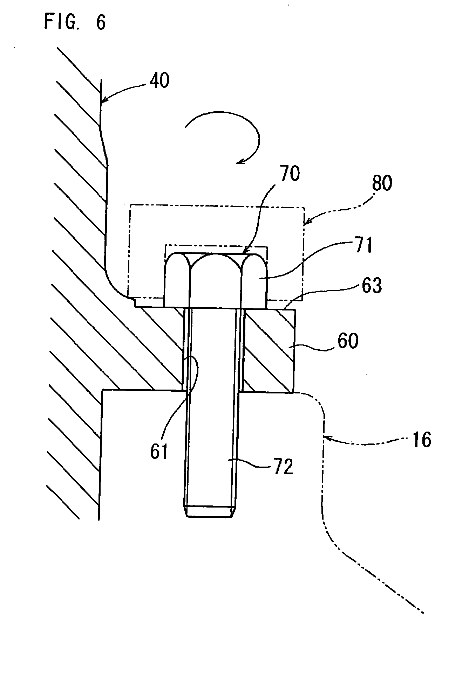

Fig. 5 is a sectional view showing the fixing flange in a state after the bolt seat surface is formed on its one side surface by the rotary tool. Fig. 6 is a sectional view showing the fixing flange in a state tightened to a knuckle, as a vehicle body side member, with a bolt.
As shown in Fig. 1, the hub unit for the wheel, as the rolling bearing apparatus for the wheel, has a hub wheel 20 and a double row angular ball bearing 31 as the rolling bearing, which are integrally formed in a unit.
The hub wheel 20 has a hub shaft 21 in a shape of a tubular shaft, and a flange 22 which is integrally formed on an outer peripheral surface of the hub shaft 21 near its one end. A plurality of hub bolts 23 for securing a wheel (not shown) with a brake rotor (not shown) interposed therebetween are fixed to the flange 22 by press-fitting, at a determined pitch.

The double row angular ball bearing 31 is assembled to the outerperipheral surface of the hub shaft 21. Specifically, the double row angular ball bearing 31 has such a structure that an outer ring 40 is arranged having a determined gap with respect to two raceway surfaces 33, 34 which are provided along the outer peripheral surface of the hub shaft 21, a plurality of balls 51, 52 as rolling elements are incorporated between the two raceway surfaces 33, 34 of the hub shaft 21 and two raceway surfaces 41, 42 which are formed on an inner peripheral surface of the outer ring 40, and these balls 51, 52 are retained by cages 55, 56.
In this embodiment, as shown in Fig. 1, of the two raceway surfaces 33, 34 provided on the outer peripheral surface of the hub shaft 21, the raceway surface 33 adjacent to the flange 22 of the hub shaft 21 is formed by grinding the outer peripheral surface of the hub shaft 21, while the raceway surface 34 adjacent to a distal end of the hub shaft 21 is formed on an outer peripheral surface of an inner ring 32 which is fitted over the outer peripheral surface of the hub shaft 21 adjacent to the distal end and secured by a caulking portion 27.

Moreover, in the hub wheel 20, a shaft (a drive shaft, for example) is spline-coupled and inserted into an internal bore of the hub shaft 21, and then, a nut is tightened to a male thread portion at a distal end of the shaft, whereby the shaft is connected so that torque can be transmitted.

As shown in Figs. 1 and 2, a fixing flange 60 for fixing the rolling bearing apparatus to a mounting surface of a vehicle body side member, for example, a knuckle 16 or a carrier which is held on a suspension device (not shown) of the vehicle is formed on an outer peripheral surface of the outer ring 40 at a center part in an axial direction. This fixing flange 60 has a plurality of bolt holes 61 which are formed at an interval of a determined angle on a determined pitch circle, and male thread portions 72 of bolts 70 are adapted to be passed through the bolt holes 61.

As shown in Figs. 2 and 3, on one side surface 62 of the fixing flange 60, bolt seat surfaces 63 in a round shape each having a diameter appropriately larger (slightly larger) than a head portion 71 of the bolt 70 are formed by cutting work concentrically with respective centers of the bolt holes 61. By this cutting work, cutting stripes (cutting marks) 63a are present on a plurality of the bolt seat surfaces 63 in a direction concentric with the respective centers of the bolt holes 61.
Further in this embodiment, as shown in Figs. 3 and 4, each of the bolt seat surfaces 63 is formed by cutting work by means of a rotary tool 90 which has a cutting edge 91 having a cutting diameter corresponding to the bolt seat surface 63, on its distal end surface.

In case where the bolt seat surfaces 63 corresponding to a plurality of the bolt holes 61 are formed at the same time on the one side surface 62 of the fixing flange 60, the rotary tools 90 of the same number as a plurality of the bolt holes 61 are simultaneously advanced against the one side surface of the fixing flange 60, whereby a plurality of the bolt seat surfaces 63 in a round shape can be formed at the same time.

The hub unit for the wheel as the rolling bearing apparatus for the wheel in this embodiment has the structure as described above.
Therefore, in a case of mounting this hub unit for the wheel on the vehicle body side member at the fixing flange 60 of the outer ring 40, the male thread portion 72 of each of the bolts 70 is inserted into each of the bolt holes 61 of the fixing flange 60, as a first step.
Thereafter, as shown in Fig. 6, in a state where an engaging portion of a tightening tool 81 is engaged with the head portion 71 of the bolt 70, the head portion 71 of the bolt 70 is turned with a preset torque, whereby the male thread portion 72 of the bolt 70 is screwed into a female thread of the knuckle 16, as the vehicle body side member, and tightened.

As shown in Figs. 2 and 3, the cutting stripes 63a are present on each of the bolt seat surfaces 63 of the fixing flange 60, in a direction concentric with the center of the bolt hole 61. Accordingly, even in case where the cutting stripes 63a on the bolt seat surface 63 are rough, it is possible to depress the friction force which occurs between the head portion 71 of the bolt 70 and the bolt seat surface 63 to be small, when the head portion 71 of the bolt 70 is turned by the tightening tool 80 with the determined tightening torque to screw the male thread portion 72 into the knuckle 16. In addition, it is possible to prevent shortage of the tightening force of the bolt 70 (the male thread portion 72), when the head portion 71 of the bolt 70 is turned by the tightening tool 80 with a determined tightening torque and the male thread portion 72 is screwed into the knuckle 16.

Moreover, as shown in Figs. 4 and 5, the bolt seat surface 63 is formed by cutting work by means of a rotary tool 90 which has a cutting edge 91 having a cutting diameter corresponding to the bolt seat surface 63, in this embodiment. Therefore, by advancing the rotary tool 90 concentrically with the center of the bolt hole 61 against one side surface of the fixing flange 60, as shown in Fig. 4, it is possible to easily form the bolt seat surface 63 in a round shape which is formed by cutting work concentrically with the center of the bolt hole 61 and has a diameter larger than the head portion 71 of the bolt 70, as shown in Fig. 5.

Further, by simultaneously advancing a plurality of the rotary tools 90 of the same number as a plurality of the bolt holes 61 of the fixing flange 60 against the one side surface of the fixing flange 60, it is possible to form a plurality of the bolt seat surfaces 63 in a round shape at the same time, and hence, working efficiency of the bolt seat surfaces 63 can be enhanced.
Still further, in case where a rotary tool having a cutting edge which can continuously perform both boring work and countersinking work is employed, it is possible to form the bolt hole 61 in the fixing flange 60 by the boring work, and thereafter to form the bolt seat surface 63 by the countersinking work continuously. In this manner, the working efficiency can be further enhanced.

This invention is not limited to the above described embodiment. For example, although the fixing flange 60 is intermittently provided in a circumferential direction and radially projected in this embodiment, a shape of the fixing flange 60 may be appropriately selected. It is also possible to carry out this invention, even though the fixing flange 60 is formed in a disc shape which is continued in a circumferential direction.
Further, although the double row angular ball bearing 31 is employed as the rolling bearing in the above described embodiment, it is also possible to carry out this invention by employing a double row taper roller bearing.

## Claims

1. A rolling bearing apparatus for a wheel comprising
a fixing flange that includes a plurality of bolt holes through which male thread portions of bolts for fixing the bearing apparatus to a vehicle body side member are respectively passed,
wherein one side surface of the fixing flange includes bolt seat surfaces in a round shape which are formed by cutting work concentrically with respective centers of the bolt holes, each of the bolt seat surfaces having a larger diameter than a head portion of the bolt.

2. The rolling bearing apparatus according to claim 1, wherein the bolt seat surface is formed by cutting work by a rotary tool which has a cutting edge on a distal end surface thereof, the cutting edge having a cutting diameter corresponding to the bolt seat surface.
